# EUROPÄISCHE PATENTSCHRIFT

(11) **EP 0 842 071 B1**
(45) Veröffentlichungstag und Bekanntmachung des Hinweises auf die Patenterteilung: **20.10.1999**
(21) Anmeldenummer: 96925756.7
(22) Anmeldetag: 16.07.1996
(51) Int. Cl.: B60T 8/42, B60T 8/40

(54) **HYDRAULISCHE KRAFTFAHRZEUGBREMSANLAGE MIT RADSCHLUPFREGELUNG**
HYDRAULIC MOTOR VEHICLE BRAKING SYSTEM WITH ABS
SYSTEME DE FREINAGE HYDRAULIQUE POUR AUTOMOBILE, AVEC ANTIBLOCAGE

(30) Priorität: 28.07.1995 DE 19527706
(43) Veröffentlichungstag der Anmeldung: 20.05.1998
(73) Patentinhaber: Continental Teves AG & Co. oHG, 60488 Frankfurt (DE)
(72) Erfinder: BURGDORF, Jochen, D-63075 Offenbach (DE); VOLZ, Peter, D-64291 Darmstadt (DE)
(86) Internationale Anmeldenummer: EP9603112
(87) Internationale Veröffentlichungsnummer: WO9704999

(56) Entgegenhaltungen:
- EP-A- 0 253 157
- DE-A- 4 201 732
- DE-A- 4 208 760
- DE-A- 4 328 837
- DE-A- 4 403 445
- DE-A- 4 412 650

## Beschreibung

Die Erfindung betrifft eine hydraulische Kraftfahrzeugbremsanlage mit Radschlupfregelung nach dem Oberbegriff des Patentanspruchs 1.

Aus der DE 43 26 040 A1 geht bereits eine hydraulische Kraftfahrzeugbremsanlage mit Radschlupfregelung hervor, die an den in Diagonalbremskreisaufteilung angeordneten Hinterrädern sowohl als Druckmodulationsventile wirksame Einlaß- und Auslaßventile aufweist als auch zur Volumenaufnahme während einer Antiblockierregelung stromabwärts zu den Auslaßventilen mit Druckmittelspeicher versehen ist. Den Vorderrädern sind ausschließlich als Druckmodulationsventile wirksame Einlaßventile zugeordnet, da der Druckabbau in den Vorderradbremsen über die den Hinterradbremsen zugeordneten Einlaß- und Auslaßventilen erfolgt. Diese Schaltungsanordnung beeinträchtigt jedoch die Güte der Bremsdruckregelung, da durch die Hintereinanderschaltung der Druckmodulationsventile für die Radbremsen eines Diagonalbremskreises zwangsläufig eine Druckabsenkung in der Vorderradbremse auch zu einer Druckabsenkung an der Hinterradbremse führt. Befindet sich die Vorderradbremse in der Druckhaltephase, so ist auch keine Druckerhöhung in der Hinterradbremse möglich. Damit ist die dargestellte Bremsanlage sowohl auf Fahrbahnen mit Niedrigreibwert als auch für Fahrbahnen mit sprunghafter Änderung von Hoch- auf Niedrigreibwert wenig geeignet.

Aus der DE 42 01 732 A1 ist eine Bremsdrucksteuereinheit bekannt, bei der an der Pumpendruckseite ein Speicher vorgesehen ist, der über ein Sperrventil vom Druckanschluß der Pumpe an den Bremskreis getrennt ist. Das Sperrventil wird geöffnet, wenn ein Bremsvorgang während einer Antriebsschlupfregelung eingeleitet wird und eine Bremsschlupfregelung einsetzt, wozu an der Radbremse stromaufwärts als auch stromabwärts elektromagnetisch betätigbare Einlaß- und Auslaßventile angeordnet sind.

In der EP 0 253 157 A1 wird eine hydraulische Bremsanlage mit Blockier- und Antriebsschlupfregelung vorgestellt, die in einer Bypassdruckmittelleitung eine Hydraulikpumpe aufweist, die an einer den Bremsdruckgeber mit der Radbremse verbindenden Bremsleitung angeschlossen ist. In der Bremsleitung befindet sich zwischen den Anschlüssen der Bypassleitung an die Bremsleitung ein elektromagnetisch oder vom Pumpendruck ansteuerbares Ventil zur Unterbrechung der hydraulischen Verbindung zwischen dem Bremsdruckgeber und der Radbremse. Die radschlupfabhängige Druckregelung in der Radbremse erfolgt durch die Richtungsumkehr der Förderpumpe. In einer Blockierdruckregelung saugt die elektrisch angetriebene Pumpe Druckmittel aus der blockiergefährdeten Radbremse und fördert es über die Bypassleitung in Richtung des Ventils und/oder zum Bremsdruckgeber. In der Antriebsschlupfregelung entnimmt die Pumpe dem Bremsdruckgeber das Druckmittel und fördert es zur Radbremse.

Daher ist es die Aufgabe der Erfindung, eine hydraulische Kraftfahrzeugbremsanlage mit Radschlupfregelung der eingangs genannten Art derart auszubilden, daß mit relativ geringem schaltungstechnischen und konstruktiven Aufwand eine geräuscharme und verbesserte Betriebsweise sowohl auf Fahrbahnen mit Niedrigreibwert als auch auf Fahrbahnen mit Reibwertsprüngen von Hoch- auf Niedrigreibwerte zustande kommt.

Diese Aufgabe wird erfindungsgemäß für eine Kraftfahrzeugbremsanlage der angegebenen Art mit den kennzeichnenden Merkmalen des Patentanspruchs 1 gelöst.

Weitere Merkmale und zweckmäßige Ausgestaltungsvarianten der Erfindung gehen aus den Unteransprüchen hervor, die anhand mehrerer Zeichnungen nachfolgend erläutert werden.

Es zeigen
- Fig. 1: eine erste hydraulische Schaltung für eine Radschlupfregelanlage mit Darstellung eines Bremskreises,
- Fig. 2: eine von Fig. 1 abweichende Druckmittelspeicher- und Ventilanordnung.

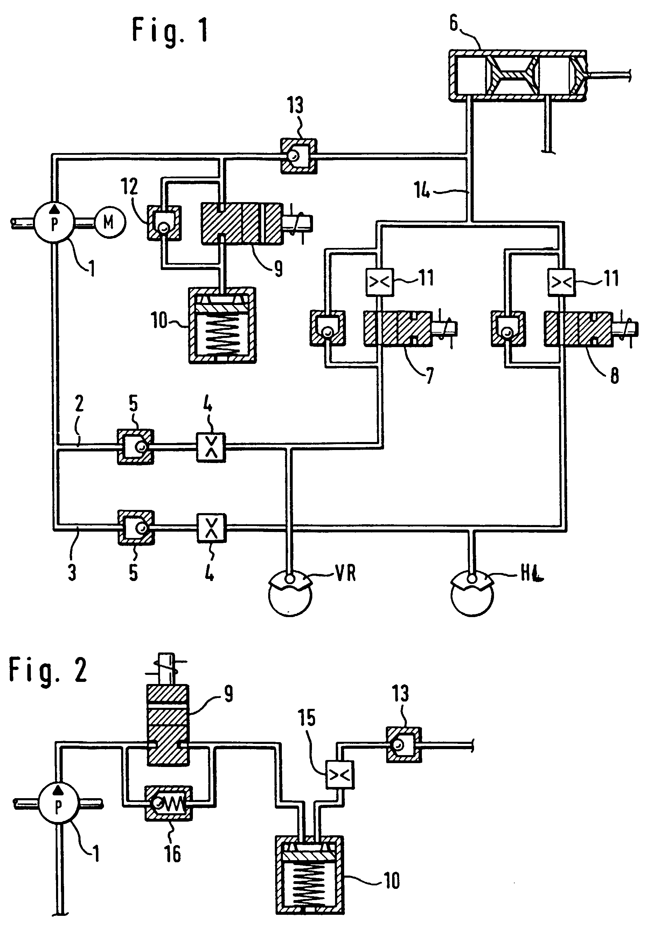

Beispielhaft dargestellt ist in Fig. 1 ausschließlich ein Bremskreis in Hinterachs- und Vorderachsaufteilung, wozu zwischen dem Bremsdruckgeber 6 und je einer Vorderrad- und Hinterradbremse VR, HL die hydraulische Verbindung (Bremsleitung 14) auf zwei Bremsleitungszweige aufgeteilt ist, in die jeweils ein in der Grundstellung elektromagnetisch nicht erregtes, offenes Druckmodulationsventil 7,8 eingesetzt ist. Die Druckmodulationsventile 7,8 sind mit Blenden 11 versehen, um den gewünschten Druckaufbaugradienten realisieren zu können. Zwischen den Druckmodulationsventilen 7,8 und den Vorderrad- und Hinterradbremsen VR, HL schließen sich an die Bremsleitungszweige jeweils voneinander getrennte Rücklaufleitungen 2,3 an, die zur Saugseite einer Pumpe 1 führen, deren Druckanschluß über ein in Richtung der Pumpe 1 sperrendes Druckrückhalteventil 13 in die zu den Vorder- und Hinterradbremsen VR, HL führenden Bremsleitungen einmündet. Die Pumpe 1 weist gleichfalls in der Fig. 1 nicht dargestellte Rückschlagventile auf, die als in der Pumpe integrierte Saug- und Druckventile wirksam sind. Es schließen sich an dem Saugventil der Pumpe 1 die den beiden Radbremsen VR, HL zugeordneten Rücklaufleitungen 2,3 an, wobei in die Rücklaufleitungen 2,3 Blenden 4 und in Richtung der Pumpe 1 öffnende Rückschlagventile 5 eingesetzt sind. Vorzugsweise sind die Rückschlagventile 5 stromabwärts zu den Blenden 4 in die Rücklaufleitungen 2,3 eingesetzt und im Schließsinn mit Federn 5' belastet, um eine Überdruck- und Druckrückhaltefunktion zu ermöglichen. Beide Rücklaufleitungen 2,3 sind stromaufwärts des Anschlusses an die Saugseite der Pumpe in einem gemeinsamen hydraulischen Knotenpunkt zusammengeführt. Ein Druckmittelspeicher 10 ist in einem Nebenanschluß zur hydraulischen Verbindung der Druckseite der Pumpe 1 mit der Bremsleitung 14 angeordnet. Im Nebenanschluß befindet sich ein in der elektromagnetisch nicht erregten Stellung geschlossenes Sperrventil 9 und ein hierzu in einer Bypass-Schaltung in Richtung des Druckmittelspeichers 10 sperrendes Rückschlagventil 12.

Durch die Zusammenführung der beiden Rücklaufleitungen 2,3 stromaufwärts zur Pumpe 1 im Knotenpunkt kann vorteilhaft auf jeweils ein elektromagnetisch erregbares, in der Grundstellung geschlossenes Druckmodulationsventil (Auslaßventil) an jeder Radbremse VR, HL verzichtet werden.

Der Druckmittelspeicher 10 erweist sich zur Bremsdruckregelung auf Fahrbahnen mit Reibwertsprüngen als zweckmäßiges Mittel, um bei plötzlicher Fahrbahnveränderung von Hoch- auf Niedrigreibwert durch Aufschalten des Sperrventils 9 überschüssiges Druckmittel der jeweiligen Radbremse VR, HL im Druckmittelspeicher 10 aufzunehmen.

Die Begrenzung des Druckmittelstroms mittels den Blenden 4, 11 in den Rücklaufleitungen 2,3 und an den Druckmodulationsventilen 7,8 ermöglicht im Zusammenwirken mit geeigneten Ventilschaltzeiten der Druckmodulationsventile 7,8 u.a. eine Druckerhöhung in der Hinterradbremse HL über das Druckniveau der Vorderradbremse VR. Hingegen geschieht auf vorteilhafte Weise ein Druckabbau oder Druckhalten in der jeweils zu regelnden Radbremse HL oder VR durch die Wahl der Ventilschaltzeiten des ihr jeweils zugehörigen Druckmodulationsventils 7,8 im Zusammenwirken mit dem Betrieb der Pumpe 1.

Die Motordrehzahl der in der Radschlupfregelung permanent angetriebenen Pumpe 1 wird in Abhängigkeit des Fahrzeugrades mit dem größten erforderlichen Druckabbaugradienten gesteuert. Die Rückschlagventile 5 in den Rücklaufleitungen 2,3 sorgen hierbei für eine Trennung der Hinterradbremse HL von der Vorderradbremse VR, so daß keinerlei Rückwirkung des Bremsdruckverlaufs von der Vorderradbremse VR auf die Hinterradbremse HL erfolgt.

Im nachfolgenden wird anhand einzelner Beispiele auf die Funktionsweise der vorgestellten Bremsanlage eingegangen. Die Fig. 1 zeigt die Druckmodulationsventile 7,8 und das Sperrventil 9 jeweils in ihrer Grundstellung, die der Bremslösestellung als auch der radschlupffreien Normalbremsstellung entspricht. Zur Einstellung eines Haltedruckniveaus in wenigstens einer der Radbremsen HL, VR schaltet das entsprechende Druckmodulationsventil 7 oder 8 elektromagnetisch erregt in Sperrstellung, so daß zwischen dem jeweils gesperrten Druckmodulationsventil und der Pumpe 1 oder ggf. durch das Druckrückhalteventil 13 ein konstantes Rad-Druckmittelvolumen eingespannt ist.
Ein Druckabbau in einer blockiergefährdeten Radbremsen HL, VR geschieht durch den Betrieb der Pumpe 1 bei gleichzeitig noch geschlossenem Druckmodulationsventil 7 oder 8. Taktweises Öffnen des für den Haltedruck in der blockierfreien Radbremse HL oder VR zugehörigen Druckmodulationsventils 7 oder 8 gleicht das in Richtung der aktiven Pumpe 1 über die Blende 4 abfließende Volumen durch ein über die Blende 11 nachgefördertes Pumpenvolumen wieder aus. Damit wird erreicht, daß das bei Pumpenbetrieb zur Radbremse mit dem gewünschten Haltedruckniveau nachströmende Druckmittel in Abhängigkeit von der Abstimmung der Blenden 4, 11 sowie der Betriebsart des getakteten Druckmodulationsventils 7 oder 8 konstant eingestellt oder gar das Druckniveau erhöht werden kann, während an der blockiergefährdeten Radbremse HL oder VR infolge der Sperrstellung des ihr zugehörigen Druckmodulationsventils 7 oder 8 eine dynamische Nachförderung und damit ein Druckhalten verhindert wird. Zwecks raschem Druckabbau in der blockiergefährdeten Radbremse eignet sich eine Einstellung der Pumpendrehzahl und damit die Einstellung des erforderlichen Fördervolumens in Abhängigkeit von der Radbremse mit dem größten erforderlichen Druckabbaugradienten, so daß der Druckmittelspeicher 10 nicht zwingend erforderlich ist.

Der Druckmittelspeicher 10 erweist sich im Hinblick auf einen plötzlichen Übergang von Hoch- auf Niedrigreibwerte der Fahrbahn als zweckmäßig, da dieser sodann das überschüssige Druckmittelvolumen der blockiergefährdeten Radbremse HR oder VR relativ schnell und in angemessener Menge nach Öffnen des Sperrventils 9 aufnehmen kann. Da die bei einem Reibwertsprung erforderliche Druckregelung zwangsläufig auch mit entsprechender Geräuschentwicklung vonstatten geht, übernimmt der Druckmittelspeicher 10 nicht nur die Aufgabe einer zeitlich begrenzten Druckmittelbevorratung, sondern auch eine äußerst effektive Geräuschdämpfungsfunktion, so daß die bisherigen aufwendigen und zusätzlich zu den Druckmittelspeichern erforderlichen Geräuschdämpfungsmaßnahmen (z. B. Kammern) entfallen. Das Entleeren des Druckmittelspeichers 10 bei einer Fehlfunktion des Sperrventils 9 wird durch das Rückschlagventil 12 gewährleistet.

Ein weiterer Vorteil der Erfindung ergibt sich durch die Druckrückhaltefunktion des Rückschlagventils 5 in der Rücklaufleitung 2, 3, wodurch das Druckniveau der Hinterradbremse HL über dem Druckniveau in der Vorderradbremse VR gehalten bzw. angehoben werden kann. Damit ergibt sich im Zusammenwirken mit einer Pulsweitenmodulation (Taktbetrieb) der Druckmodulationsventile 7,8 eine elektronisch beeinflußbare Bremskraftverteilung (maximale Hinterachs-Bremskraftausnutzung), die infolge der möglichen Druckerhöhung an der Hinterradbremse HR zur Erhöhung der Gesamtbremsleistung beitragen kann.

Die Blenden 4 in den Rücklaufleitungen 2,3 als auch die Blenden 11 im Bereich der Druckmodulationsventile 7,8 sind im Hinblick auf den gewünschten Druckaufbau- als auch Druckabbaugradienten auszuwählen, wobei die Blenden 4 in den Rücklaufleitungen 2,3 grundsätzlich kleiner als die Blenden 11 zu wählen sind, um die voran erläuterten Druckregelfunktionen realisieren zu können.

Eine weitere, explizit jedoch in Fig. 1 graphisch nicht ausgewiesene Variante zur Anordnung des Druckventils wird im nachfolgenden erläutert. Hierzu ist vorgesehen, das Druckrückhalteventil 13 als Druckventil der Pumpe 1 wirken zu lassen, wozu das in Fig. 1 abgebildete Druckrückhalteventil 13 mit einer in Sperrichtung des Ventils wirksamen Feder zu versehen ist. Damit ist das Druckventil nicht mehr integrales Bestandteil der Pumpe 1, sondern stromabwärts zum Druckspeicher 10 angeordnet. Dies hat den Vorteil, daß bei geladenem Druckspeicher 10 und niedrigen Bremsdrückern über das Rückschlagventil 12 durch die Pumpe 1 das Volumen des Druckspeichers 10 in die Bremsleitung 14 und damit zum Bremsdruckgeber 6 entleert werden kann, so daß bei Blockierschutzregelung auf Niedrigreibwert ein vollständiges Entleeren des Druckspeichers 10 möglich ist.

Es wird darauf verwiesen, daß die beschriebene Erfindung nicht auf Bremsanlagen mit Hinterachs-/Vorderachsbremskreisaufteilung beschränkt ist, sondern gleichfalls für Bremsanlagen mit Diagonalbremskreisaufteilung zur Anwendung gelangen kann.

Die Fig. 2 zeigt abweichend von der Darstellung nach Fig. 1 das Sperrventil 9 im Reihenschluß des Druckmittelspeichers 10 angeordnet, so daß in der Bremslösestellung als auch in der ausschließlich pedalbetätigten, radschlupffreien normalen Bremsstellung die Druckseite der Pumpe 1 keine direkte hydraulische Verbindung zur Bremsleitung 14 aufweist. Im Hinblick auf die in Fig. 1 beschriebene Funktionsweise geschieht die Bremsdruckregelung für die Bremsanlage nach Fig. 2 sowohl zum Bremsdruckaufbau als auch Bremsdruckabbau durch radindividuelle Variation der Ventilschaltzeiten der Druckmodulationsventile 7,8 und Betrieb der Pumpe 1, vorzugsweise mittels Drehzahlsteuerung des Antriebsmotors, angepaßt an die jeweilige Volumenentnahme aus der blockiergefährdeten Radbremse, die den größten Druckabbaugradienten erfordert. Das Sperrventil 9 wird hierzu elektromagnetisch geöffnet, um ein Rückfördern des Druckmittels aus der zu entleerenden Radbremse HR oder VR in Richtung der Bremsleitung 14 zu gewährleisten. Nach dem Öffnen des Sperrventils 9 wird über den volumenaufnehmenden Druckmittelspeicher 10 Druckmittel in Richtung des Druckrückhalteventils 13 gefördert, wobei in Reihenschaltung zwischen dem Druckmittelspeicher 10 und dem Druckrückhalteventil 13 in die Leitungsverbindung eine Geräuschdämpfungsblende 15 eingesetzt werden kann. Die Geräuschdämpfungsblende 15 verhindert einen hydraulischen Kurzschlußstrom, so daß eine Zwischenspeicherung und Pulsationsdämpfung der Druckmittelsäule in der Kammer des Druckmittelspeichers 10 sichergestellt ist. Das zum Sperrventil 9 parallel geschaltete Überdruckventil 16 ermöglicht bei einer Fehlfunktion des Sperrventils 9 (öffnet nicht) ein Abströmen des Fluids von der Pumpe 1 zum Druckmittelspeicher 10.

Soweit nicht auf alle weiteren Einzelheiten der in der Fig. 2 abgebildeten Merkmale eingegangen wurde, so entsprechen diese dennoch den vorangegangenen Beschreibungsteilen zu Fig. 1.

Es wird darauf verwiesen, daß die Blenden 4,11 in allen Ausführungsbeispielen jeweils einen konstanten Abfluß bzw. Zufluß des Fluids in Richtung der Radbremsen HR, VR bewirken, wobei in der Bremsdruckregelung permanent ein dynamisches Druckmittelvolumen von der Pumpe 1 bereitgestellt wird. Die Druckgradientenänderungen in den Radbremsen VR, HR erfolgt dabei im wesentlichen durch die Ventiltaktzeiten, insbesondere durch Pulsweitenmodulation der Druckmodulationsventile 7,8. Der Querschnitt der Blenden 4 ist in jedem Falle kleiner als der den Druckmittelmodulationsventilen 7,8 zugeordneten Blenden 11.

### Bezugszeichenliste

- 1: Pumpe
- 2: Rücklaufleitung
- 3: Rücklaufleitung
- 4: Blende
- 5: Rückschlagventil
- 5': Feder
- 6: Bremsdruckgeber
- 7: Druckmodulationsventil
- 8: Druckmodulationsventil
- 9: Sperrventil
- 10: Druckmittelspeicher
- 11: Blende
- 12: Rückschlagventil
- 13: Druckrückhalteventil
- 14: Bremsleitung
- 15: Geräuschdämpfungsblende
- 16: Überdruckventil

## Patentansprüche

1. Hydraulische Kraftfahrzeugbremsanlage mit Radschlupfregelung, mit einem Bremsdruckgeber (6), der mit wenigstens einem Paar Radbremsen (VR, HL) hydraulisch in Verbindung steht, mit Druckmodulationsventilen (7, 8) zwischen dem Bremsdruckgeber (6) und den Radbremsen (VR, HL), mit einer Rückschlagventil aufweisenden Pumpe (1), die mit ihrer Saugseite mit den Radbremsen (VR, HL), mit ihrer Druckseite mit dem Bremsdruckgeber (6) verbunden ist, wobei an der Druckseite der Pumpe (1) wenigstens ein mit einem Druckmittelspeicher (10) zusammenwirkendes Ventilmittel (9,12,13) angeordnet ist, und die Saugseite der Pumpe (1) unmittelbar an wenigstens einer den radbremsen (VR, HL) zugeordneten Rücklaufleitung (2,3) angeschlossen ist, dadurch **gekennzeichnet**, daß die Rücklaufleitung (2,3) zur Einstellung eines konstanten Druckmittelstroms, der kleiner ist als der Zufluß zu den Radbremsen (VR, HL), eine Blende (4) aufweist, und daß in der Rücklaufleitung (2, 3) zur Vermeidung einer Rückwirkung des geregelten Bremsdrucks auf die Radbremsen (VR, VL) ein in Richtung der Pumpe (1) öffnendes Rückschlagventil (5) vorgesehen ist.

2. Hydraulische Kraftfahrzeugbremsanlage nach Anspruch 1, dadurch **gekennzeichnet**, daß zwischen dem Druckmittelspeicher (10) und der hydraulischen Verbindung der Druckseite der Pumpe (1) mit dem Bremsdruckgeber (6) ein in Richtung des Druckmittelspeichers (10) sperrendes Druckrückhalteventil (13) angeordnet ist.

3. Hydraulische Kraftfahrzeugbremsanlage nach Anspruch 1, dadurch **gekennzeichnet**, daß in die hydraulische Verbindung des Druckmittelspeichers (10) mit der Druckseite der Pumpe (1) ein in der Grundstellung geschlossenes Sperrventil (9) geschaltet ist.

4. Hydraulische Kraftfahrzeugbremsanlage nach Anspruch 3, dadurch **gekennzeichnet**, daß parallel zum Sperrventil (9) ein Rückschlagventil (12) oder ein Überdruckventil (16) angeordnet ist.

5. Hydraulische Kraftfahrzeugbremsanlage nach Anspruch 2, dadurch **gekennzeichnet**, daß zwischen dem Druckmittelspeicher (10) und dem Rückschlagventil (13) eine Geräuschdämpfungsblende (15) positioniert ist.

6. Hydraulische Kraftfahrzeugbremsanlage nach Anspruch 2, dadurch **gekennzeichnet**, daß der Druckmittelspeicher (10) in Reihenschaltung zwischen der Druckseite der Pumpe (1) und dem Druckrückhalteventil (13) angeordnet ist.

7. Hydraulische Kraftfahrzeugbremsanlage nach Anspruch 2, dadurch **gekennzeichnet**, daß der Druckmittelspeicher (10) in einem Nebenanschluß der von der Druckseite der Pumpe (1) zum Druckrückhalteventil (13) führenden Druckmittelverbindung angeordnet ist.

8. Hydraulische Kraftfahrzeugbremsanlage nach Anspruch 1, dadurch **gekennzeichnet**, daß an der Saugseite der Pumpe (1,2) den beiden Radbremsen (HR, VR) zugeordnete Rücklaufleitungen (2,3) angeschlossen sind, und daß wenigstens eine der Rücklaufleitungen (2,3) eine Blende (4) und ein in Richtung zur Saugseite der Pumpe (1) öffnendes Rückschlagventil (5) aufweist.

9. Hydraulische Kraftfahrzeugbremsanlage nach Anspruch 8, dadurch **gekennzeichnet**, daß das Rückschlagventil (5) stromabwärts zur Blende (4) in die Rücklaufleitung (2,3) eingesetzt ist.

## Claims

1. Hydraulic automotive vehicle brake system with wheel slip control, including a braking pressure generator (6) which is hydraulically connected to at least one pair of wheel brakes (VR, HL), pressure modulation valves (7, 8) between the braking pressure generator (6) and the wheel brakes (VR, HL), a pump (1) having a non-return valve and being connectable with its suction side to the wheel brakes (VR, HL) and with its pressure side to the braking pressure generator (6), wherein at least one valve means (9, 12, 13) interacting with a pressure fluid accumulator (10) is arranged on the pressure side of the pump (1), and the suction side of the pump (1) is directly connected to at least one return line (2, 3) associated with the wheel brakes (VR, HL),
**characterized** in that the return line (2, 3) includes an orifice (4) for the adjustment of a constant pressure fluid flow which is smaller than the supply flow to the wheel brakes (VR, HL), and in that a non-return valve (5) opening in the direction of the pump (1) is provided in the return line (2, 3) to prevent a reaction of the controlled braking pressure with respect to the wheel brakes (VR, VL).

2. Hydraulic automotive vehicle brake system as claimed in claim 1,
**characterized** in that a pressure-retaining valve (13) which closes in the direction of the pressure fluid accumulator (10) is interposed between the pressure fluid accumulator (10) and the hydraulic connection of the pressure side of the pump (1) to the braking pressure generator (6).

3. Hydraulic automotive vehicle brake system as claimed in claim 1,
**characterized** in that a shut-off valve (9) which is closed in its inactive position is inserted into the hydraulic connection between the pressure fluid accumulator (10) and the pressure side of the pump (1).

4. Hydraulic automotive vehicle brake system as claimed in claim 3,
**characterized** in that a non-return valve (12) or a pressure-relief valve (16) is arranged in parallel to the shut-off valve (9).

5. Hydraulic automotive vehicle brake system as claimed in claim 2,
**characterized** in that a noise-dampening orifice (15) is positioned between the pressure fluid accumulator (10) and the non-return valve (13).

6. Hydraulic automotive vehicle brake system as claimed in claim 2,
**characterized** in that the pressure fluid accumulator (10) is arranged in series between the pressure side of the pump (1) and the pressure-retaining valve (13).

7. Hydraulic automotive vehicle brake system as claimed in claim 2,
**characterized** in that the pressure fluid accumulator (10) is arranged in a side conduit of the pressure fluid connection between the pressure side of the pump (1) and the pressure-retaining valve (13).

8. Hydraulic automotive vehicle brake system as claimed in claim 1,
**characterized** in that return lines (2, 3) associated with the two wheel brakes (HR, VR) are connected to the suction side of the pump (1, 2), and in that at least one of the return lines (2, 3) has an orifice (4) and a non-return valve (5) which opens in the direction of the suction side of the pump (1).

9. Hydraulic automotive vehicle brake system as claimed in claim 8,
**characterized** in that the non-return valve (5) is inserted into the return line (2, 3) downstream of the orifice (4).

## Revendications

1. Système de freinage hydraulique pour automobile, avec antiblocage, comprenant un transmetteur (6) de pression de freinage, qui est hydrauliquement relié à au moins une paire de freins de roue (VR, HL), comprenant des soupapes (7, 8) de modulation de pression entre le transmetteur (6) de pression de freinage et les freins de roue (VR, HL), et comprenant une pompe (1) pourvue d'un clapet antiretour, qui est reliée par son côté d'aspiration aux freins de roue (VR, HL) et par son côté de refoulement au transmetteur (6) de pression de freinage, au moins un moyen (9, 12, 13) de distribution hydraulique coopérant avec un réservoir (10) de fluide hydraulique étant disposé sur le côté de refoulement de la pompe (1) et le côté d'aspiration de la pompe (1) étant directement raccordé à au moins une conduite de retour (2, 3) associée aux freins de roue (VR, HL), **caractérisé** en ce que la conduite de retour (2, 3) est pourvue d'un étranglement (4) afin de régler un flux constant de fluide hydraulique qui est inférieur à l'afflux vers les freins de roue (VR, HL), et en ce qu'un clapet antiretour (5) s'ouvrant en direction de la pompe (1) est prévu dans la conduite de retour (2, 3) afin d'éviter une rétroaction de la pression régulée de freinage sur les freins de roue (VR, HL).

2. Système de freinage hydraulique pour automobile selon la revendication 1, **caractérisé** en ce qu'une soupape (13) de rétention de pression, se fermant en direction du réservoir (10) de fluide hydraulique, est disposée entre le réservoir (10) de fluide hydraulique et la liaison hydraulique du côté de refoulement de la pompe (1) avec le transmetteur (6) de pression de freinage.

3. Système de freinage hydraulique pour automobile selon la revendication 1, **caractérisé** en ce qu'une soupape d'isolement (9), fermée dans sa position de base, est montée dans la liaison hydraulique du réservoir (10) de fluide hydraulique avec le côté de refoulement de la pompe (1).

4. Système de freinage hydraulique pour automobile selon la revendication 3, **caractérisé** en ce qu'un clapet antiretour (12) ou une soupape de surpression (16) est disposé parallèlement à la soupape d'isolement (9).

5. Système de freinage hydraulique pour automobile selon la revendication 2, **caractérisé** en ce qu'un étranglement (15) d'insonorisation est positionné entre le réservoir (10) de fluide hydraulique et la soupape (13) de rétention de pression

6. Système de freinage hydraulique pour automobile selon la revendication 2, **caractérisé** en ce que le réservoir (10) de fluide hydraulique est disposé dans le montage en série entre le côté de refoulement de la pompe (1) et la soupape (13) de rétention de pression.

7. Système de freinage hydraulique pour automobile selon la revendication 2, **caractérisé** en ce que le réservoir (10) de fluide hydraulique est disposé dans une dérivation de la liaison de fluide hydraulique menant du côté de refoulement de la pompe (1) à la soupape (13) de rétention de pression.

8. Système de freinage hydraulique pour automobile selon la revendication 1, **caractérisé** en ce que des conduites de retour (2, 3) associées aux deux freins de roue (VR, HL) sont raccordées au côté d'aspiration de la pompe (1), et en ce qu'au moins une des conduites de retour (2, 3) est pourvue d'un étranglement (4) et d'un clapet antiretour (5) s'ouvrant en direction du côté d'aspiration de la pompe (1).

9. Système de freinage hydraulique pour automobile selon la revendication 8, **caractérisé** en ce que le clapet antiretour (5) est inséré dans la conduite de retour (2, 3) en aval de l'étranglement (4).
